(19) Europäisches Patentamt
European Patent Office
Office européen des brevets

(11) **EP 3 705 459 A1**

(12) **EUROPÄISCHE PATENTANMELDUNG**

(43) Veröffentlichungstag:
**09.09.2020   Patentblatt 2020/37**

(51) Int Cl.:
**C02F 1/48** (2006.01)           **C04B 22/00** (2006.01)
**C04B 28/02** (2006.01)          **B01J 19/12** (2006.01)

(21) Anmeldenummer: **20161465.8**

(22) Anmeldetag: **06.03.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **07.03.2019   AT 501782019**

(71) Anmelder:
• **Neuhuber, Franz Martin**
  **4822 Bad Goisern am Hallstättersee (AT)**

• **Wendelin, Georg**
  **4033 Linz (AT)**

(72) Erfinder: **Neuhuber, Franz Martin**
  **4822 Bad Goisern am Hallstättersee (AT)**

(74) Vertreter: **Wildhack & Jellinek**
  **Patentanwälte OG**
  **Landstraßer Hauptstraße 50**
  **1030 Wien (AT)**

(54) **WASSERAUFBEREITUNG MIT ELEKTRISCHER UND / ODER MAGNETISCHER UND / ODER ELEKTROMAGNETISCHER ENERGIE UND BETONHERSTELLUNG UNTER VERWENDUNG DIESES WASSERS**

(57)   Die Erfindung betrifft eine Vorrichtung zur Aufbereitung von Wasser umfassend
- einen Hohlraumresonator (5) mit einer Durchflussstrecke mit einem Einlass (101) für das aufzubereitende Wasser und einem Auslass (102), wobei sich die Durchflussstrecke in Durchflussrichtung (103) räumlich periodisch erweitert und verjüngt, wobei sich die Querschnittsfläche der Durchflussstrecke stetig ändert, und
- zumindest eine im Außenbereich der Durchflussstrecke angeordnete Antenne (8) zur Beaufschlagung des in der Durchflussstrecke befindlichen Wassers mit elektrischer und/oder magnetischer und/oder elektromagnetischer Energie.

## Figur 1

EP 3 705 459 A1

**Beschreibung**

Die Erfindung betrifft ein Verfahren und eine Vorrichtung zur physikalischen Wasseraufbereitung mittels elektromagnetischer Anregung sowie ein Verfahren zur Herstellung von Beton unter Verwendung des entsprechend aufbereiteten Wassers.

Aus dem Stand der Technik sind verschiedene Methoden zur Wasseraufbereitung bekannt. Das Wassermolekül weist ausgeprägte Dipoleigenschaft auf und kann somit auf magnetische Felder reagieren. Es ist bekannt, dass man mit einer Behandlung durch elektromagnetische Strahlung, oder Permanentmagneten eine Wirkung auf das Wasser erzielen kann. Bekannte Verfahren zur physikalischen Wasseraufbereitung erfolgen daher beispielsweise durch Behandlung mittels Permanentmagneten, Behandlung mittels elektrisch angesteuerten Spulen, welche magnetische Felder bzw. elektromagnetische Wechselwirkungen hervorbringen, Behandlung mittels bestimmter geometrischer Wasserführung (z.B. Wirbel, Verwirbelung, goldener Schnitt, Pyramiden, etc.), oder Behandlung mittels speziellen Mineralien (Kristallen, Muschelmehl, Fischmehl, organischen Materialien, etc.). Weiters gibt es viele Geräte und Verfahren, welche die Verfahren der einzelnen Behandlungsprinzipien miteinander kombinieren.

Beispielsweise sind Vorrichtungen bekannt, die Permanentmagnete in Form von Ringmagneten, oder N-S-Magneten aufweisen und so zum Flüssigkeitsstrom ausgerichtet sind, dass die vorbeifließenden Wassermoleküle sich entsprechend dem Magnetfeld ausrichten.

Bekannt sind weiters elektrisch angesteuerte Spulen, welche magnetische Felder bzw. elektromagnetische Wechselwirkungen hervorbringen, um eine Wirkung auf das zu behandelnde Fluid zu erzielen.

Für die Behandlung mittels geometrischer Wasserführung wird angenommen, dass die Spiralbewegung die natürliche Bewegung von Wasser ist und durch diese Verwirbelung eine Auflösung und Neubildung von Wasserclustern erfolgt. Weiters sind für die Behandlung mittels spezieller Minerale Geräte und Verfahren bekannt, die eine Wasservitalisierung bzw. Wasserbelebung mittels der Übertragung von Schwingungen von aufgeladenen Mineralen auf das fließende Medium postulieren. Ein Kontakt des zu behandelnden Wassers mit den Mineralen ist jedoch negativ, da die Wasserqualität zumeist nicht bekannt ist und durch die Minerale unvorhersehbar beeinflusst wird.

Der größte Nachteil der bekannten Verfahren ist jedoch, dass keine nachweisbaren Effekte auf das Wasser erzielt werden können.

Aufgabe ist es, eine Vorrichtung und ein Verfahren bereitzustellen, um die Eigenschaften des Wassers nachweislich zu verbessern. Insbesondere werden ein einfacher Prozess und eine Vorrichtung zur Durchführung eines solchen Prozesses bereitgestellt, die eine Wasserbehandlung basierend auf den Eigenfrequenzen des flüssigen Wassers ermöglichen bzw. auf die Eigenfrequenzen des flüssigen Wassers abgestimmt sind, um durch diese Anregung des Wassers Einfluss auf die inneren Strukturen des Wassers nehmen zu können.

Die Erfindung löst diese Aufgabe mit einer Vorrichtung zur Aufbereitung von Wasser umfassend

- einen Hohlraumresonator mit einer Durchflussstrecke mit einem Einlass für das aufzubereitende Wasser und einem Auslass, wobei sich die Durchflussstrecke in Durchflussrichtung räumlich periodisch erweitert und verjüngt, wobei sich die Querschnittsfläche der Durchflussstrecke stetig ändert, und
- zumindest eine im Außenbereich der Durchflussstrecke angeordnete Antenne zur Beaufschlagung des in der Durchflussstrecke befindlichen Wassers mit elektrischer und/oder magnetischer und/oder elektromagnetischer Energie.

Die Vorrichtung ermöglicht den Zugang zu den inneren Strukturen des Wassers und die gezielte Beeinflussung der Eigenschaften des behandelten Wassers, wobei vor allem die elektrochemischen Eigenschaften des behandelten Wassers beeinflusst werden. Das Wasser kann für eine Vielzahl von Anwendungen eingesetzt werden und seinen positiven Einfluss je nach Anwendungszweck übertragen. Die Erfindung ermöglicht beispielsweise Wasser für bestimmte Zwecke vorzubehandeln, um anschließend für den jeweiligen Anwendungszweck ein nachweislich verbessertes Ergebnis zu erzielen. So kann mit einer bevorzugten Ausführungsform der Erfindung beispielsweise Wasser für die Herstellung von Beton oder Ziegeln, Wasser für Bewässerungs- oder Reinigungszwecke sowie Trinkwasser vorteilhaft hergestellt werden.

Für die Verwendung als Antenne kann beispielsweise auf Resonanzbauteile zurückgegriffen werden, insbesondere auf $\lambda/2$-, $\lambda/4$- oder $\lambda/8$-Dipole. Die Antenne kann je nach Anwendung aus unterschiedlichsten Materialien bestehen, wie beispielsweise Messing, Niro, Kunststoff, Kohlenstoff, Glas oder Quarz. Vorteilhaft sind zum Beispiel Glasrohre mit einer Länge von 5 x $\lambda/2$ der entsprechenden Wasserresonanzfrequenzwellenlänge.

Um besonders konstante Ergebnisse zu erhalten, ist es vorteilhaft die Erdungsverhältnisse zu kennen. Wenn die Erdungsverhältnisse bekannt sind und entsprechend ausgeführt sind, kann die Wasserbehandlung besonders einfach in die gewünschte Richtung geführt werden. Je nach Ausbildung des Minuspoles kann beispielsweise das Redoxpotential des behandelten Wassers steigen oder sinken.

Eine bevorzugte Ausführungsform sieht vor, dass im Bereich des Einlasses, in Strömungsrichtung vor der Durchflussstrecke, eine Führungseinheit vorgesehen ist, die eine Anzahl von schraubenförmig angeordneten Führungselementen aufweist, die insbesondere dazu ausgebildet sind, das durch die Führungseinheit strömende Wasser spiralförmig einzurollen, wobei vorzugsweise vorgesehen ist, dass sich der Strömungsquerschnitt der Führungseinheit in Strömungsrichtung verengt.

Um im Bereich der Durchflussstrecke eine möglichst gleichmäßige und turbulenzfreie Führung des Wassers bei gleichzeitiger räumlicher Variation der Druckverteilung zu ermöglichen, kann vorgesehen sein, dass die Durchflussstrecke eine in Durchflussrichtung räumlich periodische Verjüngung und Erweiterung aufweist, und/oder dass die Durchflussstrecke eine knickfreie und stetige Verjüngung und Erweiterung aufweist.

Eine besonders gleichmäßige und turbulenzfreie Führung des Wassers wird erreicht, indem der Querschnitt der Durchflussstrecke kreisförmig oder elliptisch ausgebildet ist.

Die räumliche Variation des Drucks kann auf der Wassersäule aufgebaut werden, indem der Durchmesser des Querschnitts der Durchflussstrecke über die Durchflussrichtung sinusförmig variiert.

Zum selben Zweck kann vorgesehen sein, dass der Verlauf des Durchmessers des Querschnitts über die Durchflussrichtung durch Addition eines konstanten und zumindest eines sinusförmigen Anteils mit einer vorgegebenen räumlichen Periodenlänge festgelegt ist. Bei mehr als einem sinusförmigen Anteil kann dieser Funktion auch eine zusätzliche Funktion als Oberwelle addiert werden.

Eine bevorzugte elektromagnetische Beeinflussung des Wassers kann erreicht werden, indem eine Vielzahl von Antennen im Bereich des Außenumfangs der Durchflussstrecke, insbesondere im gleichen Abstand zur Durchflussstrecke, angeordnet sind.

Dieser Effekt kann weiter verbessert werden, indem die Antenne oder zumindest eine Antenne eine Länge oder Resonanzwellenlänge aufweist, die der räumlichen Periodelänge der Verjüngungen und Erweiterungen der Durchflussstrecke des Hohlraumresonators oder einem Vielfachen oder Teil dieser räumlichen Periodenlänge entspricht.

Zum vorteilhaften Aufprägen elektromagnetischer Energie auf fließendes Wasser kann vorgesehen sein, dass die räumliche Periodenlänge der Durchflussstrecke der Wellenlänge einer Eigenresonanzfrequenz von flüssigem Wasser, insbesondere im Bereich von 1-5 GHz oder 1-3 GHz, entspricht, vorzugsweise innerhalb eines Bereichs zwischen 2,45 GHz +/- 15 % liegt.

Zu diesem Zweck kann weiters vorteilhaft vorgesehen sein, dass als Antennen Dipolantennen vorgesehen sind, die parallel zur Durchströmungsrichtung der Durchflussstrecke oder spiralförmig im Außenbereich um die Durchflussstrecke gewickelt oder gewendelt sind und vorzugsweise von einem strömungsseitigen Ende zum jeweils anderen strömungsseitigen Ende der Durchflussstrecke verlaufen.

Um Störsignale im Wasser dämpfen zu können, kann vorteilhaft vorgesehen sein, dass zumindest eine Antenne, insbesondere alle Antennen, an einen oder mehrere Piezo-Resonatoren angeschlossen sind, deren einzelne Resonanzfrequenz im Bereich von 1 kHz bis 300 MHz liegt.

Zum selben Zweck kann vorgesehen sein, dass zumindest eine Antenne, insbesondere alle Antennen, vorzugsweise einen röhrenförmigen, insbesondere metallischen, Außenkörper aufweist, in dessen Inneren eine Anzahl von Schwingkristallen angeordnet ist, deren einzelne Resonanzfrequenz im Bereich zwischen 1 kHz bis 300 MHz liegt.

Ein vorteilhaftes Aufprägen von elektromagnetischer Energie auf das Wasser kann erreicht werden, indem die Antenne oder die Antennen an einem elektrischen Wechselspannungs- oder Wechselstromgenerator angeschlossen ist, der dazu ausgebildet ist, an die Antenne oder die Antennen ein elektrisches Spannungs- oder Stromsignal mit einer vorgegebenen Frequenz anzulegen, sodass die Antenne oder die Antennen elektromagnetische Wellen abstrahlt, deren Wellenlänge der räumlichen Periodenlänge der Durchflussstrecke oder einem Vielfachen oder Teil dieser Periodenlänge entspricht.

Besonders vorteilhaft bei der Verwendung von fließendem Wasser kann dabei die Frequenz im Bereich zwischen 1 und 5 GHz oder 1 und 3 GHz, vorzugsweise innerhalb eines Bereichs von 2,45 GHz +/- 15 % gewählt werden.

Um Störeffekte von außerhalb auf das im Hohlraumresonator befindliche Wasser zu vermeiden, kann vorgesehen sein, dass im Außenbereich der Antennen eine Abschirmung gegen äußere Störquellen vorgesehen ist, wobei die Abschirmung insbesondere in Form eines die Antenne oder die Antennen und den Hohlraumresonator umgebenden Gehäuses ausgebildet ist.

Zu diesem Zweck kann insbesondere auch vorgesehen sein, dass das Gehäuse zumindest teilweise, insbesondere im Bereich seines Außenmantels, doppelwandig ausgebildet ist, wobei in den doppelwandigen Gehäusebereichen jeweils ein abschirmendes Material, insbesondere Wasser, zwischen den Gehäusewänden angeordnet und/oder eingeschlossen ist.

Alternativ oder zusätzlich kann vorgesehen sein, dass die äußere dem Hohlraumresonator abgewandte Oberfläche der äußeren Gehäusewand spiegelnd oder reflektierend, ausgebildet ist.

Um eine Abstrahlung zu vermeiden und die von den Antennen nach außen abgestrahlten elektromagnetischen Wellen auf das Wasser zu richten, kann vorgesehen sein, dass die den Antennen zugewandte Seite der inneren Gehäusewand spiegelnd oder reflektierend, ausgebildet ist.

Erfindungsgemäß ist auch ein Verfahren zur Aufbereitung von Wasser, insbesondere für die Betonherstellung, wobei das Wasser durch eine Durchflussstrecke des Hohlraumresonators befördert wird, deren Querschnitt sich mehrfach, insbesondere periodisch, erweitert und verjüngt, und wobei das Wasser während des Durchströmens durch die Durchflussstrecke durch elektromagnetische Wellen bestrahlt wird, deren Wellenlänge der räumlichen Periodenlänge der Durchflussstrecke oder einem Vielfachen oder Teil dieser Periodenlänge entspricht, wobei die Frequenz insbesondere im Bereich zwischen 1 und 5 GHz liegt, vorzugsweise innerhalb eines Bereichs von 2,45 GHz +/- 15 % liegt. Durch dieses Verfahren kann auf einfache Weise ein aufbereitetes Wasser bereitgestellt werden.

Um besonders konstante Ergebnisse zu erhalten, ist es vorteilhaft die Erdungsverhältnisse der Wasserzuführung zu kennen. Je nach Ausbildung des Minuspoles in dem Prozess kann das Redoxpotential steigen oder sinken. Wenn die Erdungsverhältnisse bekannt sind und entsprechend ausgeführt sind, kann die Wasserbehandlung besonders einfach in die gewünschte Richtung geführt werden. Je nach Bedarf kann eine größere Endfestigkeit des Betons bei Verwendung eines höheren Redoxpotentials bzw. eine Zementeinsparung bei Verwendung eines niedrigeren Redoxpotentials ermöglicht werden.

Um eine noch effektivere Wasseraufbereitung zu ermöglichen, kann vorgesehen sein, dass das Wasser, bevor es die Durchflussstrecke durchläuft, durch eine Führungseinheit umfassend eine Anzahl von schraubenförmig angeordneten Führungselementen geführt wird und dadurch spiralförmig eingerollt wird.

Erfindungsgemäß ist weiters ein Verfahren zur Betonherstellung, umfassend

- Aufbereiten von Wasser nach dem zuvor beschriebenen Verfahren, wobei das Wasser mit einer elektromagnetischen Frequenz im Bereich zwischen 1 und 5 GHz, insbesondere mit einer Frequenz im Bereich zwischen 2,45 GHz +/- 15 % beaufschlagt wird,
- Herstellen von Beton unter Verwendung von Zement, von Zuschlagstoffen und dem aufbereiteten Wasser.

Diese Vorgehensweise erlaubt es, einen Beton zu erstellen, der verglichen mit Beton, der mit unbehandeltem Wasser hergestellt wurde, andere Eigenschaften, insbesondere eine unterschiedliche Härte, aufweist.

Für die Konstruktion der Antennen der Wasseraufbereitungsanlage können beispielsweise Schwingkristalle verwendet werden, insbesondere speziell behandelte Schwingkristalle.

Schwingkristalle zeichnen sich dadurch aus, dass bei Anlegen einer elektrischen Spannung eine mechanische Verformung hervorgerufen wird. Liegt diese Spannung nun nicht mehr an, nimmt das Material seine ursprüngliche Form wieder an und es kommt zu Deformationsschwingungen, wobei Dickenscher-Schwinger, Flächenscher-Schwinger, Längen-Schwinger, Biege-Schwinger, Längenbiege-Schwinger und Dehnungs-Schwinger bekannt sind. Bei Anlegen einer Wechselspannung nahe der Eigenfrequenz des Kristalls wird durch die Schwingungen ein Signal mit sehr genauer Frequenz mit einer definierten Amplitude erzeugt. Die Frequenz dieses Signals ist von der Schnittrichtung und den geometrischen Eigenschaften des Schwingkristalls abhängig und wird an der Fläche normal zur x- Achse des Kristalls erzeugt. Schwingkristalle können für eine Vielzahl von Einsatzgebieten verwendet werden.

Für verschiedene Anwendungen ist es notwendig, Schwingkristalle mit unterschiedlichen Frequenzen bereitzustellen.

Ein Verfahren zur Oberflächenbehandlung von Schwingkristallen, insbesondere zur Veränderung der Eigenfrequenz von Schwingkristallen, kann die folgenden Schritte umfassen:

a) Bereitstellen der Schwingkristalle,
b) Vermischen der Schwingkristalle mit einem wasserhaltigen Lösungsmittel, insbesondere mit einer wässrigen Lösung oder Wasser,
c) Absenken der Temperatur unter den Gefrierpunkt des Lösungsmittels innerhalb einer kurzen Zeitspanne, insbesondere Gefriertrocknen,
d) insbesondere Anlegen eines Vakuums zur Trocknung.

Durch dieses Verfahren ist es möglich, die Eigenfrequenz der Schwingkristalle gezielt zu beeinflussen. Die Oberfläche der Schwingkristalle wird mit einer trockenen Wasserstruktur beschichtet, wobei die Dicke der Schicht durch das Verfahren sehr genau gesteuert werden kann, sodass eine genaue Änderung der Frequenz erfolgen kann. Als Ausgangsmaterial eignen sich alle Schwingkristalle, also alle Minerale bzw. Kristalle mit piezoelektrischen Eigenschaften. Die Zeitspanne zur Absenkung der Temperatur ist vorzugsweise so kurz gewählt, dass ein Schockgefrieren ermöglicht wird. Diese Zeitspanne kann üblicherweise einige Minuten lang dauern, beispielsweise ca. 1 - 5 Min.

Als Ausgangsmaterial können in Schritt a) Schwingkristalle verwendet werden, die Piezo-Resonatoren sind, deren Resonanzfrequenz zwischen 1 kHz bis 300 MHz liegt. Die oberflächenbehandelten Schwingkristalle können dadurch für einen breiten Bereich an Eigenfrequenzen hergestellt werden und ermöglichen so einen Einsatz für viele unterschiedliche Anwendungen.

Es kann vorgesehen sein, dass als Schwingkristalle in Schritt a) Minerale bzw. Kristalle in gemahlener und/oder gebrochener Form verwendet werden. Dadurch können Bruchstücke, die durch eine bestimmte Eingangsfrequenz nicht angeregt werden als Füllmaterial dienen, um ein flächiges Aneinander - Anliegen der stimulierten Schwingkristalle zu verhindern und somit eine freie Schwingbewegung zu ermöglichen. Es kann weiters vorgesehen sein, dass als Schwingkristalle in Schritt a) Schwingquarze unterschiedlicher Größe und/oder unterschiedlicher Eigenfrequenz verwendet werden. Durch die Verwendung von Schwingquarzen kann eine besonders exakte Änderung der Eigenfrequenz vorgenommmen werden, da aufgrund der exakten Zuschnitte und der daraus resultierenden glatten Oberflächen eine exakte Berechnung der spezifischen Oberfläche möglich ist.

Durch die Verwendung von Siliciumdioxiden mit der Summenformel $SiO_2$ als Schwingkristall kann in Schritt a) ein besonders weit verbreitetes Material mit gut erforschten Eigenschaften verwendet werden, das eine exakte Änderung der Eigenfrequenz ermöglicht. Zudem ist dieses Material kostengünstig erhältlich. Um das Verfahren besonders kostengünstig durchführen zu können, können gemahlene und/oder gebrochene Quarzkristalle verwendet werden.

Um das Spektrum der erzielbaren Eigenfrequenzen zu erweitern kann vorgesehen sein, dass in Schritt b) zu den Schwingkristallen Minerale, insbesondere die Salze von Alkalimetallen und/oder Erdalkalimetallen und/oder Übergangsmetallen wie zum Beispiel gemahlener / geschliffener Granat, verschiedene gemahlener / geschliffener Feldspäte, gemahlene oder geschliffene Kupfer- oder Eisenkiese, etc. beigemengt werden. Die Zusätze verhindern, dass Schwingkristalle flächig aneinander anliegen und ermöglichen so eine freie Schwingung. Durch die spezifischen Zusätze wird dabei das Strahlungsspektrum variiert.

In Schritt b) kann z.B. hochreines Wasser verwendet werden, insbesondere mit einer Leitfähigkeit bei 25 °C zwischen 0,5 und 5 μS/cm. Auf diese Weise kann die Struktur der trockenen Wasserstruktur positiv in Richtung Homogenität beeinflusst werden.

Es kann auch vorgesehen sein, dass in Schritt b) Wasser verwendet wird, das bestimmte gelöste Zusätze enthält. Diese Zusätze werden teilweise in die Trockenwasserschicht eingebaut und erzeugen individuelle Frequenzänderungen.

Um eine besonders exakte Frequenzänderung vornehmen zu können, kann vorgesehen sein, dass die Schwingkristalle in Schritt b), insbesondere homogen, befeuchtet werden.

Weiters kann vorgesehen sein, dass in Schritt b) eine alkoholische Lösung, insbesondere mit 1 Vol% bis 10 Vol.% EtOH, vorzugsweise 2 bis 5 Vol% EtOH, verwendet wird.

Um die Verbindung zwischen Schwingkristallen und Lösungsmittel zu verbessern, kann vorgesehen sein, dass nach Schritt b) maximal 10 Gew.% Lösungsmittel enthalten sind. Dabei wird eine erdfeuchte Masse erhalten.

Es kann vorgesehen sein, dass zwischen den Schritten b) und c) eine Bestrahlung der Schwingkristalle mit elektromagnetischer Strahlung erfolgt, insbesondere mit einer Wellenlänge im Infrarot-Bereich, vorzugsweise mit einer Wellenlänge zwischen 780 nm und 3000 nm. Auf diese Weise kann mehr Wasser an die Schwingkristalle gebunden werden und die durch das Verfahren gebildete wässrige Grenzschicht kann auf eine höhere Schichtdicke eingestellt werden. Das Spektrum der einstellbaren Frequenzänderungen wird dadurch erweitert.

Es kann vorgesehen sein, dass die Bestrahlung durch direkte Sonneneinstrahlung erfolgt. Dadurch erfolgt eine gleichzeitige Bestrahlung mit einem breiten Spektrum elektromagnetischer Strahlung, insbesondere mit einem breiten Spektrum infraroter Strahlung. Die Ausbildung der Verbindung zwischen den Schwingkristallen und Wasser wird dadurch verbessert und die Dicke der Trockenwasser - Grenzschicht kann erhöht werden. Dadurch wird das Spektrum der einstellbaren Frequenzänderung zusätzlich erweitert.

Um die Effektivität der Bestrahlung zu erhöhen kann vorgesehen sein, dass die Bestrahlung für zumindest 5 Minuten, insbesondere zumindest 15 Minuten, erfolgt.

Die oberflächenbehandelten Schwingkristalle weisen eine Eigenfrequenz auf, die für bestimmte Anwendungen exakt angepasst ist.

Die oberflächenbehandelte Schwingkristalle, insbesondere erhalten durch ein zuvor beschriebenes Verfahren, sind mit einer Trockenwasser - Grenzschicht beschichtet, bzw. sind Wassermoleküle an der Oberfläche assoziiert. Die Schwingkristalle weisen also eine trockene Wasserschicht auf, wobei durch diese Beschichtung die Eigenfrequenz der Schwingkristalle verändert ist. Die Eigenfrequenz ist in Abhängigkeit von der Dicke der Beschichtung exakt einstellbar.

Die Eigenfrequenz der Schwingkristalle liegt im Bereich zwischen 1 kHz und 300 MHz, insbesondere entspricht sie der Eigenfrequenz oder zumindest einem harmonischen Teil der Eigenfrequenz von flüssigem Wasser. Die Schwingkristalle können dadurch die von fließendem Wasser abgegebene Strahlung aufnehmen, verstärken und reflektieren. Auf diese Weise ist eine Anregung von fließendem Wasser möglich. Die Eigenschaften des Wassers werden dadurch positiv verändert.

Die beschriebenen Schwingkristalle eignen sich besonders für die Herstellung von Antennen für eine zuvor beschriebene Wasseraufbereitungsanlage.

Eine solche Vorrichtung kann zur Wasseraufbereitung, insbesondere für die Betonherstellung, verwendet werden. Die Betonherstellung eignet sich besonders dazu, die verbesserten Eigenschaften von behandeltem Wasser nachzuweisen.

Dazu kann ein Verfahren zur Betonherstellung durchgeführt werden, umfassend

- Aufbereiten von Wasser in einer solchen Vorrichtung, wobei das Wasser durch eine Durchflussstrecke des Hohlraumresonators befördert wird, deren Querschnitt sich mehrfach, insbesondere periodisch, erweitert und verjüngt, und

wobei das Wasser während des Durchströmens durch die Durchflussstrecke durch elektromagnetische Wellen bestrahlt wird, deren Wellenlänge der räumlichen Periodenlänge der Durchflussstrecke oder einem Vielfachen oder Teil dieser Periodenlänge entspricht, wobei die Frequenz insbesondere im Bereich zwischen 1 und 5 GHz liegt, vorzugsweise innerhalb eines Bereichs von 2,45 GHz +/- 15 % liegt, wobei insbesondere vorgesehen ist, dass das Wasser, bevor es die Durchflussstrecke durchströmt, durch eine Führungseinheit umfassend eine Anzahl von schraubenförmig angeordneten Führungselementen geführt wird und dadurch spiralförmig eingerollt wird, und

- Herstellen von Beton unter Verwendung von Zement, von Zuschlagstoffen, und dem aufbereiteten Wasser.

Der so hergestellte Beton weist andere Eigenschaften auf, insbesondere eine andere Härte.

Gegebenenfalls können weitere Zusatzstoffe für die Herstellung des Betons verwendet werden. Eine zusätzliche Verbesserung des Betons kann erzielt werden, indem das Wasser, bevor es die Durchflussstrecke durchläuft, durch eine Führungseinheit umfassend eine Anzahl von schraubenförmig angeordneten Führungselementen geführt wird und dadurch spiralförmig verwirbelt wird.

Zur Erstellung des Betons können die folgenden Verfahrensschritte vorgenommen werden:

- Aufbereiten von Wasser wie vorstehen beschrieben, wobei das Wasser mit einer elektromagnetischen Frequenz im Bereich zwischen 1 und 5 GHz, insbesondere mit einer Frequenz im Bereich zwischen 2,45 GHz +/- 15 % beaufschlagt wird,
- Herstellen von Beton unter Verwendung von Zement, Zuschlagstoffen und dem aufbereiteten Wasser.

Die Erfindung ist anhand der folgenden Figuren und Beispiele ohne Einschränkung des allgemeinen erfinderischen Gedankens dargestellt.

Fig. 1 zeigt einen Längsschnitt durch eine beispielhafte Wasseraufbereitungsanlage.
Fig. 2 zeigt einen Querschnitt durch die Wasseraufbereitungsanlage aus Fig. 1.
Fig. 3 zeigt einen Längsschnitt durch eine beispielhafte Wasseraufbereitungsanlage mit einer alternativen Anordnung der Antennen.
Fig. 4 zeigt einen Querschnitt durch die Wasseraufbereitungsanlage aus Fig. 3.
Fig. 5 zeigt einen Längsschnitt durch eine einzelne Antenne.

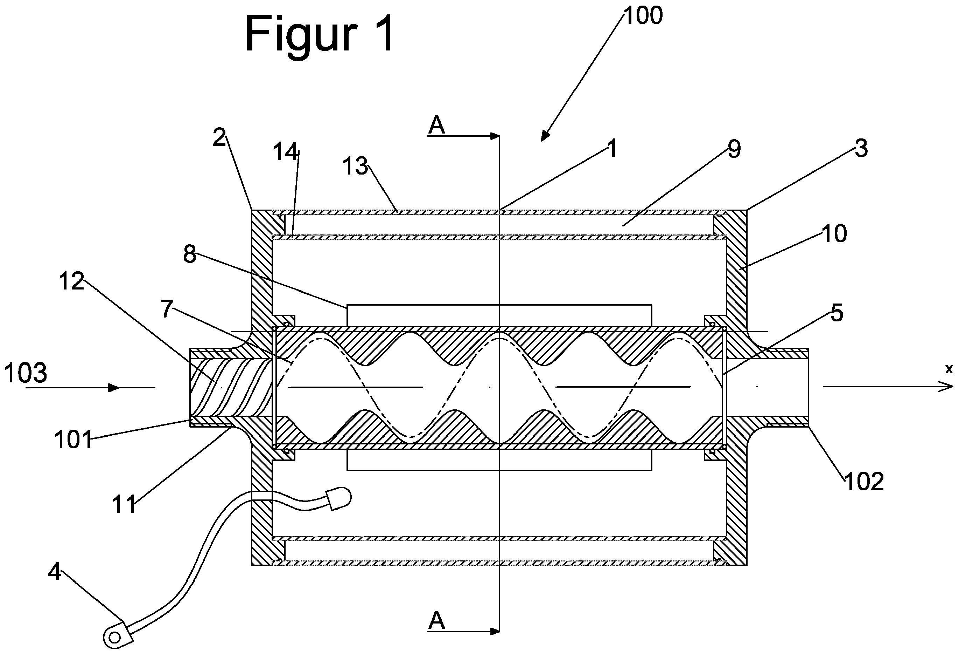

**Fig. 1** zeigt eine erste Ausführungsform einer erfindungsgemäßen Wasseraufbereitungsanlage 100. Diese weist einen Einlass 101 und einen Auslass 102 auf, wobei Wasser vom Einlass 101 durch das Innere der Wasseraufbereitungsanlage 100 zum Auslass 102 in der durch den Pfeil gekennzeichneten Strömungsrichtung 103 strömen kann. Das Wasser strömt im Bereich des Einlasses 101 durch eine Führungseinheit 11 und in einen daran angeschlossenen Hohlraumresonator 5. Das Wasser strömt daraufhin durch den Hohlraumresonator 5, der von einer Anzahl von Antennen 8 umgeben ist, und tritt anschließend durch den Auslass 102 aus der Wasseraufbereitungsanlage 100 aus. Der Hohlraumresonator 5 und die Antennen 8 sind von einem Gehäuse 10 umgeben.

Die Führungseinheit 11 weist schraubenförmig angeordnete in den Strömungskanal ragende Führungselemente 12 bzw. Einlasswindungen auf. Strömt Wasser durch den Einlass 101 mit der Führungseinheit 11, so wird das durchströmende Wasser aufgrund der Schraubenform der Führungselemente 12 verwirbelt bzw. eingerollt, der Wasserstrom weist insgesamt eine schraubenförmige Stromrichtung auf.

Zusätzlich kann auch vorgesehen sein, dass sich die Führungseinheit 11 im Bereich der Führungselemente 12 bzw. Einlasswindungen, insbesondere hyperbolisch, verjüngt. Die Maßnahme um einen zirkularen und/oder spiralförmigen Zulauf zu realisieren kann entweder fertigungstechnisch im Einlassbereich des Flanschteiles integriert sein, also im Bereich des Einlasses des Hohlraumresonators 5 situiert sein oder kostengünstig durch ein zusätzlich einzusetzendes Stanzbauteil umgesetzt werden.

Die hier dargestellte Führungseinheit 11 ist nicht zwingend erforderlich und kann allenfalls auch entfallen.

In weiterer Folge fließt das Wasser in den Hohlraumresonator 5, der dazu ausgebildet ist, das durch ihn hindurch fließende Wasser während des Durchflusses abwechselnd zu beschleunigen und zu verzögern. Dies wird im vorliegenden Ausführungsbeispiel durch - in Durchflussrichtung gesehen - intermittierende Änderungen der Querschnittsfläche bewirkt. Da die einzelnen Querschnittsflächen des Hohlraumresonators 5 im vorliegenden Ausführungsbeispiel kreisförmig ausgebildet sind, wird die Beschleunigung und Verzögerung des Wasserstroms in Durchflussrichtung durch Änderungen des Durchmessers in Durchflussrichtung festgelegt. Beispielsweise kann vorgesehen sein, dass sich die Form und Größe der Querschnittsfläche und/oder der Flächeninhalt der Querschnittsfläche periodisch und/oder stetig ändert.

Im vorliegenden Ausführungsbeispiel ist der Innenbereich des Hohlraumresonators 5 an allen Stellen glatt ausgebildet und weist keine Kanten und Sprünge auf.

Die Glattheit kann bevorzugt erreicht werden, indem der Durchmesser des über die gesamte Durchlaufrichtung kreisförmigen Querschnitts des Hohlraumresonators 5 einen periodischen Verlauf mit einer vorgegebenen räumlichen Periode in Durchflussrichtung aufweist. Der Verlauf des Durchmessers D(x) kann beispielsweise, wie hier dargestellt, der Summe eines konstanten Durchmesserwerts und eines sinusförmigen Durchmesswerts inklusive eines allfälligen sinusförmigen Oberwellenanteils entsprechen und die folgende Form aufweisen:

$$D(x) = D_0 + D_1 * \sin(a\,x) + D_2 * \sin(b\,x)$$

Beispielhaft können die Parameter $D_0$, $D_1$, a wie folgt festgelegt sein:

$D_0$ = 0,0552 m.
$D_1$ = 0,0276 m.
$D_2$ = 0,0276 m
a = 0,125 m$^{-1}$.
b = 0,276 m$^{-1}$.

In den dargestellten Ausführungsformen ist der Abstand zwischen dem Periodenanfang und dem Endpunkt der Periode 12,5 cm.

Fließt nun Wasser am Einlass 101 sowie am Auslass 102 mit konstanter Geschwindigkeit durch die Wasseraufbereitungsanlage 100, so stellt sich - auch aufgrund der Inkompressibilität des Wassers - in Durchflussrichtung eine inhomogene Geschwindigkeitsverteilung ein. Gemäß dem Satz von Bernoulli bewirken die sich einstellenden unterschiedlichen Geschwindigkeiten in Durchflussrichtung eine inhomogene Druckverteilung in Durchflussrichtung. Die Druckverteilung weist dabei dieselbe räumliche Periodizität - gesehen in Durchflussrichtung - auf wie die Verteilung des Durchmessers oder der Querschnittsfläche. Es stellt sich eine Pulsation der fließenden Wassersäule ein, deren Verlauf, insbesondere deren Periodizität, im wesentlichen dem Verlauf bzw. der Periodizität des Durchmessers entspricht.

Der Hohlraumresonator 5 kann grundsätzlich aus unterschiedlichen Materialien, wie beispielsweise Kunststoff oder Glas bestehen, die für die von den Antennen 8 erzeugten elektromagnetischen Wellen durchlässig sind.

Die Durchflussstrecke bildet aufgrund ihrer konkreten Form einen Resonanzraum des Hohlraumresonators 5 aus, der durch die von ihm verursachten instationären Strömungsverhältnisse die natürliche elektromagnetische Abstrahlung von fließendem Wasser verstärkt. Die elektromagnetische Abstrahlung des Wassers wird durch diese Maßnahme und aufgrund des periodischen Verlaufs des Hohlraumresonators 5 weiter verstärkt. Gesetzmäßig steht das elektrische Feld normal zu seinem zugehörigen magnetischen Feld. Normal zu diesen beiden Feldern steht die zugehörige Kraftkomponente (Kraftfeld).

Die Druckpulsation im Holraumresonator 5 fällt in dieses Kraftfeld und erzeugt gemäß den physikalischen Gesetzmäßigkeiten eine entsprechende Pulsation im magnetischen sowie elektrischen Feld.

Durch die dargestellten Ausführungsformen wird eine genaue Bewegungsform der Flüssigkeit erzielt, die zu einer gegenseitigen Anregung zwischen einem Antennensystem 6 und dem durchströmenden Wasser führt, da die Bauteile auf die Eigenresonanz des Wassers abgestimmt sind.

Im Außenbereich des Hohlraumresonators 5 ist eine Anzahl von Antennen 8 vorgesehen, die spiralförmig um den Hohlraumresonator 5 angeordnet sind und von einem strömungsseitigen Ende der Durchflussstrecke des Hohlraumresonators 5 bis zu dessen anderen Ende verlaufen. Die Antennen 8 weisen eine Resonanzwellenlänge auf und strahlen bevorzugt elektromagnetische Wellen mit dieser Resonanzwellenlänge ab, die der räumlichen Periodenlänge der Verjüngungen und Erweiterungen der Durchflussstrecke des Hohlraumresonators 5 oder einem Vielfachen oder Teil dieser räumlichen Periodenlänge entspricht. Da mehrere gleichartige Antennen 8 radial um den Hohlraumresonator 5 angeordnet sind, erhält man ein Antennensystem 6, das seinen Brennpunkt in der Mittelachse des Hohlraumresonators 5 hat.

Grundsätzlich besteht ein Antennensystem 6, das um den Hohlraumresonator 5 herum angebracht ist, entweder aus einer Einzelantenne 8 oder aus einer, insbesondere geraden, Anzahl von einzelnen Antennen 8.

Diese Antennen 8 können, wie in **Fig. 1** dargestellt, gerade ausgebildet sein und parallel zur Durchströmungsrichtung 103 liegen und auf diese Weise lineare elektromagnetische Wellen abgeben.

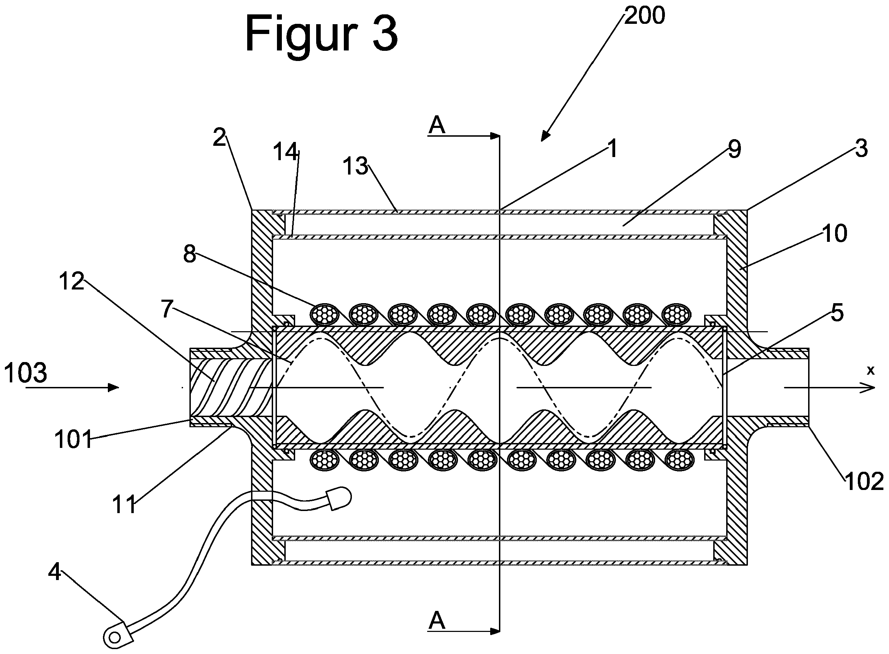

Alternativ können die Antennen 8 auch, wie in **Fig. 3** dargestellt, um den Hohlraumresonator 5 herum gewickelt sein und demgemäß zirkulare elektromagnetische Strahlung abgeben.

Beide Arten von Antennen 8 sind sowohl dazu in der Lage elektromagnetische Wellen auf das Wasser im Hohlraumresonator 5 aufzuprägen, als auch vom Wasser in Hohlraumresonator 5 abgegebene elektromagnetische Strahlung zu empfangen und in einen Spannungs- oder Stromwert umzuwandeln.

Im vorliegenden Ausführungsbeispiel hat der Hohlraumresonator 5 eine Länge von λ/2, der maximale Durchmesser des Hohlraumresonators 5 beträgt λ/2 und der minimale Durchmesser λ/4, wobei auch ein minimaler Durchmesser von λ/8 vorgesehen sein könnte.

Das Antennensystem 6 umfasst eine Anzahl von Einzelantennen 8 welche eine Länge von λ/2 aufweisen. In der dargestellten Ausführungsform beträgt die Länge 33 cm. Diese Länge kann je nach Material um die entsprechenden Verkürzungsfaktoren verkürzt werden.

Für die Aktivität des behandelten Wassers zeigt sich eine zirkular polarisiert abstrahlendes Antennensystem 8 **(Fig. 3)** als besonders vorteilhaft. Daher stellt die radiale Anordnung einzelner gewendelter Antennen 8 eine bevorzugte Ausführungsform der Erfindung dar. Die Richtung der Windung ist je nach Anwendungsfall zu wählen. Gewendelte Antennen 8 können nur polarisierte elektromagnetische Wellen abstrahlen.

Weiters ist ein Erdungselement 4 vorgesehen, um zu vermeiden, dass sich elektrostatische Aufladungen ergeben, welche die Funktion des Antennensystems 6 beeinträchtigen würden. Das Erdungselement 4 ist an eine metallische Gehäusewand angeschlossen.

Fließt nun Wasser durch den Resonatorraum des Hohlraumresonators 5 bildet sich durch die pulsierende Bewegung eine stehende Druckwelle 7. Die Flüssigkeit fließt zopfförmig bzw. wird dabei abwechselnd beschleunigt und gebremst. Die pulsierende Bewegung des Wassers hat neben den rein fluidmechanischen Eigenschaften auch elektrodynamische Eigenschaften und bewirkt insbesondere den Effekt, dass im Falle einer Bestrahlung durch die einzelnen Antennen 8 des Antennensystems 6 eine elektromagnetische Wechselwirkung zwischen den Antennen 8 und dem Wasser im Hohlraumresonator 5 besteht. Über die verstärkte natürliche Abstrahlung des fließenden Wassers durch die pulsierende Bewegung wird über das Phänomen der Resonanz im Antennensystem 6 eine Spannung induziert. Der piezoelektrisch aktive Kern des Antennensystems 6, also in der dargestellten Ausführungsform die in die Antennen 8 eingebrachten Schwingquarze 300, wird zum Schwingen angeregt. Werden die einzelnen Antennen 8 durch Anlegen einer Spannung oder Aufprägen eines Stroms elektromagnetisch angeregt, so fungieren die Einzelantennen 8 als Sendeantennen. Über die sich im Hohlraumresonator 5 ausbildende stehende Welle 7 wird das durchfließende Wasser wieder über die gleiche Resonanz und durch die Oberwellen, welche aus der Sendeantenne 8 stammen, beeinflusst.

Grundsätzlich besteht auch die Möglichkeit, magnetisch und elektrisch abstrahlende Sendeantennen 8 gemischt einzusetzen; in diesem Fall sind die Achsen der Antennen 8 in Blickrichtung Fließrichtung um 90° zueinander verschoben.

Die Einzelantennen 8 sind in der dargestellten Ausführungsform aus Messing und hohl, wobei die Einzelantennen 8 mit einem Material gefüllt sind, das bei Spannungsinduktion zum Schwingen neigt.

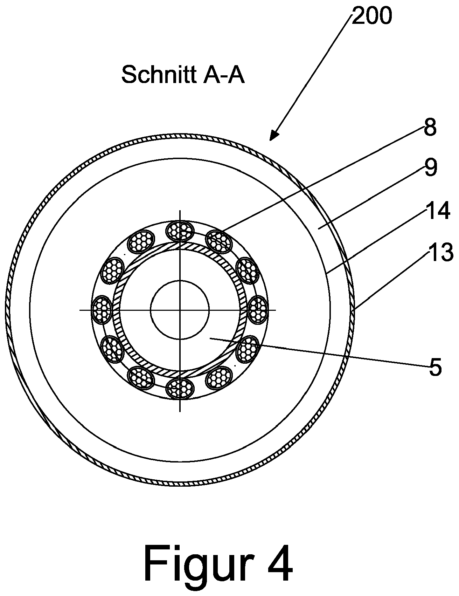

Eine bevorzugte und in den **Fig. 3** und **Fig. 4** dargestellte Ausführungsform der Erfindung zeigt eine Wasseraufbereitungsanlage 200 mit einer Anzahl von Antennen 8, die mit Schwingquarzen 300 gefüllt sind. Die Schwingquarze 300 weisen die verschiedensten Schwingungsmodi auf: Dickenscherschwinger, Flächenscherschwinger, Längenschwinger, Biegeschwinger, Längen- Biegeschwinger und Dehnungsschwinger.

Bei der einfachsten Ausführung besteht dieses Material aus industriell gefertigten unterschiedlichsten Schwingquarzen. Diese können grundsätzlich ohne nähere Festlegung der Ausrichtung oder Anordnung innerhalb der hohlen Antenne 8 angeordnet werden. Abhängig vom Einsatzzweck kann jeweils ein Gemisch unterschiedlicher Schwingquarze mit weit oder eng gestufter Korngrößenverteilung verwendet werden.

Im Rahmen der Erfindung können unterschiedliche Schwingquarze verwendet werden. Grundsätzlich stehen entweder industriell gefertigte Schwingquarze zur Verfügung, deren Resonanzfrequenzen vorab fertigungsbedingt vorgegeben sind.

Alternativ kann auch speziell gebrochenes $SiO_2$ verwendet werden. Dieser Bruch und die Form der Quarzkristalle ist durchwegs unterschiedlich, allerdings sind nach der Gaußschen Normalverteilung auch sämtliche möglichen Formen vorhanden. Je nach Mahlgrad steht auch eine sehr große innere Oberfläche der Mischung zur Verfügung. Aufgrund der vielen Formen ist gebrochenes $SiO_2$ auch in der Lage einen großen Frequenzbereich abzudecken.

Eine bevorzugte Weise Schwingquarze 300 für den hier dargestellten Einsatzzweck herzustellen wird anhand des folgenden Beispiels 1 dargestellt.

Dieses Verfahren eignet sich zur Veränderung der Eigenfrequenz von Schwingkristallen bzw. auch ganz allgemein zur Beschichtung von Schwingquarzen unabhängig von der vorliegenden Wasseraufbereitungsanlage und den darin verwendeten Antennen.

Beispiel 1: Oberflächenbehandlung von Schwingkristallen

Als Ausgangsmaterial wurden in einer Rollenmühle gebrochene Quarzkristalle ($SiO_2$), mit einer Korngröße von 0,063 - 0,2 mm (Sieblinienanalyse) verwendet. 1 kg des Ausgangsmaterials wurden behandelt. Als Lösungsmittel wurden 100 ml 3 %-Alkohollösung verwendet. Das Ausgangsmaterial wurde mit dem Lösungsmittel bei einer Temperatur von 20°C vermengt und zu einer erdfeuchten Masse mit 10 Gew.% Flüssigkeit verarbeitet. Die erdfeuchte Masse wurde auf einer Fläche von 5000 cm$^2$ mit einheitlicher Schichtdicke aufgetragen und für 15 min mit Sonnenlicht (15:00 Uhr; UTC+2, September 2018, ca. 48°N, 16°O) bestrahlt. Anschließend wurde die Masse innerhalb von 2 min in einem Gefriertrockner auf eine Temperatur von -30°C gebracht. Zusätzlich wurde ein Vakuum ($10^{-2}$ mbar) angelegt und das Material für 24h getrocknet. Die so oberflächenbehandelten Schwingkristalle wiesen einen Gewichtszuwachs von 0,1 % auf.

Die auf diese Weise behandelten Schwingkristalle 300 wurden zur Konstruktion der Antennen 8 verwendet.

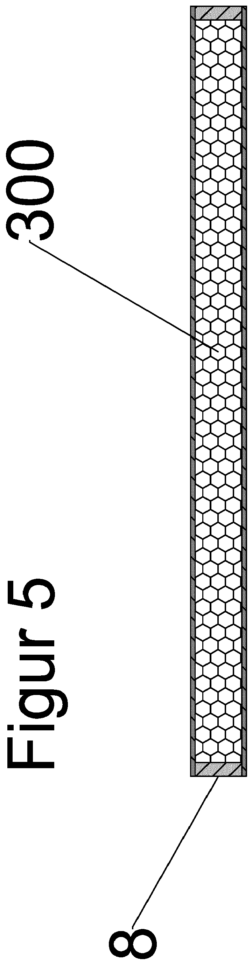

**Fig. 5** zeigt den Aufbau einer beispielhaften Antenne 8. Die Beschichtung der Schwingkristalle 300 ist als hexagonale Trockenschicht dargestellt. Die Schwingquarze 300 werden in die hohlen Antennenkörper gefüllt und leicht verdichtet. Die so hergestellten Antennen 8 weisen alle die gleiche Länge auf und sind auf die Eigenfrequenz von flüssigem Wasser abgestimmt.

Um ein optimales Antennensystem 6 zu erhalten, sind insgesamt zwölf einzelne Antennen 8 radial um den Hohlraumresonator 5 gewendelt und gleichmäßig über den Umfang verteilt angeordnet. Vorteilhaft ist es, wenn vier einzelne Antennen 8 vorhanden sind, die paarweise einander gegenüber, und vorzugsweise gleichmäßig über den Umfang verteilt, angeordnet sind.

Durch diese Anordnung der einzelnen Antennen 8 des Antennensystems 6 um den Hohlraumresonator 5 befindet sich der gemeinsame Brennpunkt der resultierenden Richtcharakteristik aller Einzelantennen 8 im Mittelpunkt der Längsachse des Hohlraumresonators 5.

Bei Anregung der Antennenköper durch die emittierte Strahlung des pulsierend fließenden Wassers wird in den Einzelantennen 8 entsprechend den Gesetzmäßigkeiten der Antennenphysik eine Wechselspannung induziert. Durch die piezoelektrischen Eigenschaften der Schwingquarze 300 im Inneren der Einzelantennen 8 werden diese durch die anliegende Spannung verformt. Folgt an der betreffenden Stelle der Verformung dann eine Verringerung der Spannung, so gehen die Quarze in ihre Ausgangslage zurück, sodass an einer Achse der Schwingquarze 300 eine elektrische Ladung erzeugt wird. Dieser Vorgang passiert entlang der gesamten Einzelantenne 8 und 90° phasenverschoben zum Takt der induzierten Spannung.

In genau diesem Takt der induzierten Spannung werden auch die Ladungen an den einzelnen Schwingquarzen 300 erzeugt. Somit wird die Antenne 8 von innen durch die schwingenden Quarze elektrisch angeregt und sendet elektromagnetische Strahlung entsprechend ihrer Richtcharakteristik aus. Die einzelnen Quarzpartikel schwingen entsprechend deren Eigenfrequenzen unterschiedlich und modulieren so der Trägerwelle, welche durch die empfangene Welle mit der Wellenlänge der induzierten Spannung und der Sendeantenne 8 bestimmt ist, Oberwellen auf.

Diese elektromagnetische Welle wird entsprechend der Strahlungscharakteristik der λ/2 - Antenne 8 in den Hohlraumresonator 5 ausgesendet, in dem sich eine stehende Welle bildet, die der Resonanzfrequenz des fließenden Wassers entspricht. Über dieses Resonanzphänomen ist es möglich, Zugang zu den inneren Strukturen des Wassers zu bekommen und dessen strukturelle Qualität zu beeinflussen. Dies äußert sich messbar in den elektrochemischen Eigenschaften des behandelten Wassers.

In einer bevorzugten Ausprägung der Erfindung werden Resonanzphänomene unter Zuhilfenahme der Antennen 8, die elektromagnetisch als Sende- und Empfangsantennen fungieren, genutzt, durch welche eine Wirkung auf die Flüssigkeit erzielt wird, ohne dass sich die Flüssigkeit und die empfindlichen behandelten Schwingquarzen 300, welche als "Taktgeber" für das Antennensystem 6 fungiert, berühren.

Es ist nicht erforderlich, dass über die Antenne 8 oder die Antennen 8 eine Schwingung auf das durch die Durchflussstrecke durchströmende Wasser extern aufgeprägt werden. Der verwendete Hohlraumresonator 5 mit der Durchflussstrecke und die Antennen 8 können gemeinsam als Schwingkreis betrieben werden, wobei elektromagnetische Energie zwischen der Durchflussstrecke und der Antenne 8 hin und her übermittelt wird und dabei einzelne Frequenzen gedämpft oder verstärkt werden.

Auch durch ein rein passives Verhalten der Wasseraufbereitungsanlage 100 wird das durch die Durchflussstrecke strömende Wasser hinsichtlich seiner inneren Struktur modifiziert. Die hierfür physikalisch notwendige Energie stammt aus dem Leitungsdruck (=potentielle Energie) und aus der Fließgeschwindigkeit (=kinetische Energie). Die Umwandlung erfolgt durch die erzeugte Pulsation. Gegebenenfalls können auch die einzelnen Antennen 8 mit passiven Schaltelementen beschalten sein.

Daneben ist es natürlich möglich, mittels eines Wechselspannungs- oder Wechselstromgenerators elektromagnetische Energie in die Wasseraufbereitungsanlage 100 einzubringen und auf den Hohlraumresonator 5 bzw. auf das durch die Durchflussstrecke fließende Wasser aufzuprägen. Der Wechselspannungs- oder Wechselstromgenerator ist dazu ausgebildet, an die Antenne 8 ein elektrisches Spannungs- oder Stromsignal mit einer vorgegebenen Frequenz anzulegen, sodass die Antenne 8 elektromagnetische Wellen abstrahlt, deren Wellenlänge der räumlichen Periodenlänge der Durchflussstrecke oder einem Vielfachen oder Teil dieser Periodenlänge entspricht.

Zur vorteilhaften Beeinflussung von fließendem Wasser kann vorzugsweise eine Frequenz verwendet werden, die im Bereich zwischen 1 und 5 GHz oder 1 und 3 GHz liegt, vorzugsweise innerhalb eines Bereichs von 2,45 GHz +/- 15 % liegt.

Darüber hinaus kann auch ein selektiver Verstärker vorgesehen sein, der die schwache durch das in der Durchflussstrecke fließende Wasser an der Antenne 8 induzierte Spannung verstärkt und auf die Antenne 8 aufprägt.

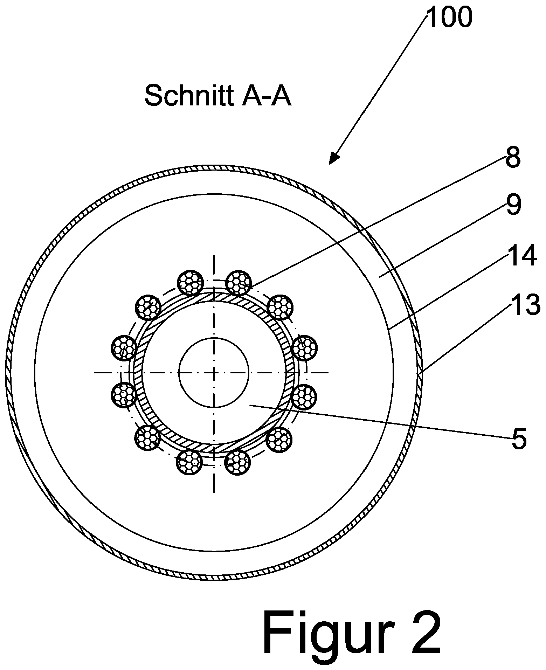

In den dargestellten Ausführungsformen ist das Gehäuse 10 zum Teil durch einen Einlassflanschteil 2 gebildet, der den Einlass 101 mit der Führungseinheit 11 ausbildet. Der Auslass 102 ist im vorliegenden Ausführungsbeispiel durch einen Auslassflanschteil 3 ausgebildet. **Fig. 2 und 4** zeigen, dass sowohl der Einlassflanschteil 2 als auch der Auslassflanschteil 3 im Wesentlichen kreisförmig ausgebildet sind und die Deckflächen des zylinderförmig ausgebildeten Gehäuses ausbilden.

**Fig. 1 und 3** zeigen, dass das Gehäuse weiters einen zylindermantelförmigen weiteren Gehäuseteil aufweist, der die beiden Flanschteile 2, 3 miteinander mechanisch verbindet und den Innenbereich des Zylinders strahlungsdicht abschirmt. Das Gehäuse 10 schirmt die Antennen 8 sowie den Hohlraumresonator 5 vor von außen auf die Wasserarbeitungsanlage 100 fallenden elektromagnetischen Wellen ab. Zudem wird die elektromagnetische Strahlung der Antennen 8 und des Hohlraumresonator 5 abgeschirmt, sodass eine Abstrahlung in die Umgebung vermieden wird.

Im vorliegenden Ausführungsbeispiel weist das Gehäuse 10 im Mantelbereich eine Doppelwandstruktur mit einer äußeren zylindrischen Wand 13 und einer inneren zylindrischen Wand 14 auf. Beide zylindrischen Wände 13, 14 verbinden jeweils die beiden Flanschteile miteinander, wobei zwischen den zylindrischen Wänden 13, 14 und den Flanschteilen 2, 3 ein abgeschlossener hohlzylinderförmiger Zwischenbereich 9 ausgebildet ist, der mit Wasser gefüllt ist. Die beiden zylindrischen Wände sind voneinander beabstandet und koaxial angeordnet. Das Wasser im Zwischenbereich 9 absorbiert sämtliche Strahlung im Resonanzbereich des Antennensystems 6, da dieses materialbedingt gerade dieselbe Resonanzfrequenz wie das Wasser im Hohlraumresonator 5 aufweist.

Weiters ist es möglich die innere zylindrische Wand 14 an der Innenseite mit einer metallischen Reflexionsschicht zu beschichten, damit die elektromagnetischen Wellen aus dem Antennensystem 6 reflektiert werden und somit wieder in der Längsachse des Hohlraumresonators 5 fokussiert werden.

Ebenso ist es von Vorteil die äußere zylindrische Wand 13 an der Außenseite mit einer metallischen Reflexionsschicht zu beschichten, damit die elektromagnetischen Wellen aus der Umgebung reflektiert werden und nicht in das Gehäuse 10 eindringen und den Hohlraumresonator 5 stören.

Für die Abschirmung können vorteilhafterweise metallische Materialien verwendet werden, wobei je nach Anwendungsfall Messing, gegebenenfalls vergoldet oder versilbert, Niro, Kupfer, gegebenenfalls vergoldet oder versilbert, oder Rotguss eingesetzt werden können.

Beispiel 2: Behandlung von Wasser

Das folgende Beispiel betrifft die Behandlung des Wassers mit der in Fig. 1 dargestellten Wasseraufbereitungsanlage. Die verwendete Wasseraufbereitungsanlage bestand aus Edelstahl V2A, wobei die Innenseite des Mantels poliert war. Als Material der Antennen wurde Quarzglas gewählt (gefüllt mit Schwingkristallen nach Beispiel 1). Es wurden 4,5 l Wasser mit einer Temperatur von 11°C und einem Druck von 6 bar in der Wasseraufbereitungsanlage behandelt. Die Durchflusszeit betrug 5 Sekunden. Das aufbereitete Wasser wurde in Glasbehältern für ca. 24 Stunden gelagert. Das unbehandelte Referenzwasser wurde gleichzeitig mit dem Testwasser entnommen und direkt in die Lagerungsbehälter überführt. Die Zuleitung vom Hochbehälter bestand aus einer PE-Kunststoffleitung. Die Erdung erfolgt über die ausgeführte Hausinstallationserdung, sodass der Abfluss der elektromagnetischen Energie nicht über die Wassersäule erfolgte und sich der Minuspol des Prozesses außerhalb des Wassers ausbildete.

Beispiel 3: Untersuchung des behandelten Wassers

Die Eigenschaften des unbehandelten Referenzwassers und des behandelten Testwassers wurden untersucht.

Der pH-Wert wurde nach EN ISO 10523 bestimmt. Es zeigte sich, dass durch die Behandlung der pH-Wert leicht gesenkt wurde.

Die elektrische Leitfähigkeit ist ein Maß für die im Wasser gelösten Ionen und wurde nach EN 27888 bestimmt. Durch die Behandlung wurde die elektrische Leitfähigkeit leicht gesenkt.

Die Säurekapazität ist ein Maß für das im Wasser vorhandene Hydrogencarbonat und wurde nach DIN 38409-7 gemessen. Durch die Behandlung konnte die Säurekapazität gesenkt leicht werden.

Der Permanganat-Index ist ein Maß für im Wasser vorhandene oxidierbare organische Stoffe in der Wasserprobe und wurde nach EN ISO 8467 bestimmt. Durch die Behandlung wurde der Kaliumpermanganat-Verbrauch leicht angehoben.

Die Versuche zeigen, dass durch die Behandlung des Wassers die Eigenschaften des Wassers beeinflusst wurden. Die Ergebnisse sind in Tabelle 1 zusammengefasst.

Tabelle 1

| Parameter | Referenzwasser | Testwasser |
|---|---|---|
| pH - Wert | 8,20 | 8,00 |
| El. Leitfähigkeit [$\mu$S/cm] | 321 | 316 |

(fortgesetzt)

| Parameter | Referenzwasser | Testwasser |
|---|---|---|
| Säurekapazität Ks 4,3 [mmol/l] | 3,59 | 3,47 |
| Permanganatindex [mg/l $O_2$] | <0,5 | 0,62 |

Beispiel 4: Vergleichsversuche mit nach anderen Verfahren behandeltem Wasser

Es wurden zudem Vergleiche mit nach anderen Verfahren behandeltem Wasser vorgenommen. Um möglichst eine breite Palette an Arten der Herangehensweise abzudecken, wurden Vergleiche mit nach folgenden Methoden behandeltem Wasser durchgeführt.

a) Elektrische Spule (Kalk-Max):

Hierbei werden um die Wasserleitung zwei Kabel gewickelt, welche an eine Steuerung angeschlossen werden. Durch gezieltes Anlegen einer gepulsten Spannung an diese Kabel, welche um das Rohr gewickelt eine Spule mit wenig Windungen bilden, soll eine Wirkung auf das Wasser erzielt werden.

b) Grander-Gerät:

Hierbei wird ein Gerät in die Wasserleitung gebaut, dass aus einem verchromten Messingblock besteht. Das Wasser fließt in der Mitte des Blockes gerade durch das Gerät. Im Bereich rund um diesen Strömungskanal sind Bohrungen situiert, welche mit einem speziellen Informationswasser gefüllt sind, welches auf das vorbeifließende Wasser Einfluss haben soll.

Die Ergebnisse dieser Untersuchungen sind in Tab. 2 zusammengefasst.

Tabelle 2

| Parameter | Testwasser | El. Spule Kalk Max | Grander Wasserbelebung |
|---|---|---|---|
| pH - Wert | 8,00 | 8,22 | 8,20 |
| el. Leitfähigkeit [$\mu$S/cm] | 316 | 320 | 319 |
| Säurekapazität Ks 4,3 [mmol/l] | 3,47 | 3,60 | 3,61 |
| Permanganatindex [mg/l $O_2$] | 0,62 | <0,5 | <0,5 |

Beispiel 5: Herstellung von Beton mit behandeltem und unbehandeltem Wasser

Die Herstellung von Beton bzw. die Eigenschaften des Betons zeigen die Eigenschaften des verwendeten Wassers besonders deutlich. Bereits geringe Unterschiede, beispielsweise im Redox-Potential, des Wassers haben einen großen Einfluss auf die erhaltenen Eigenschaften des Betons. Gleichzeitig können Versuche mit Beton standardisiert ausgeführt werden und liefern so vergleichbare Ergebnisse. Diese hochstandardisierte Vorgangsweise wäre bei Versuchen in biologischen Systemen nur schwer erzielbar, obwohl auch in biologischen Systemen Effekte sichtbar sind.

Für die folgenden Versuche wurde ein Referenzbeton mit unbehandeltem Referenzwasser hergestellt und ein Testbeton mit behandeltem Testwasser, wobei die Wasserbehandlung gemäß Beispiel 2 erfolgte. Zur Herstellung des Betons wurde zum Ausschluss von Mischungsungenauigkeiten ein werksgemischter Fertigtrockenbeton (Moldan B30) verwendet. Dieser wird mit einem Zement der Qualität CEM II/A-S 42,5 hergestellt. Als Zuschlag ist eine kalkbasierte Steinbrechung mit einer Körnung von 0 - 8 mm beigemischt. Die verwendete Mischung ist durchgehend homogen.

Es wurden für jeden Versuch jeweils 5 Proben mit 7,7 kg Frischbeton hergestellt mit Referenzwasser und 5 Proben mit 7,7 kg Frischbeton hergestellt mit Testwasser entnommen und sofort getestet.

Weiters wurden jeweils 5 Prüfkörper gemäß EN 12390-1 in Würfelform (150mm x150mm) hergestellt, indem der Frischbeton in genormte Würfelschalungen gefüllt wurde. Nach einem Tag wurden die Prüfkörper ausgeformt und normgerecht in ein Wasserbad umgelagert und für 28 Tagen ausgehärtet.

Beispiel 6: Untersuchung des Betons

Zur Untersuchung des Betons wurden jeweils 5 Proben aus dem in Beispiel 5 hergestellten Frischbeton, sowie die 5 in Beispiel 5 hergestellten Prüfkörper verwendet. Die Ergebnisse sind in Tabelle 3 zusammengefasst.

Zur Bestimmung der Konsistenz des Frischbetons wurden Ausbreitmaßversuche gemäß ÖNORM EN 12350-5 durchgeführt. Die Druckfestigkeit wurde gemäß EN 12390-4 in einer Druckpresse bestimmt.

Das Ausbreitungsmaß ist ein Parameter für die Konsistenz des Betons. Für die Bestimmung des Ausbreitungsmaßes wird die Verformung eines in eine Kegelstumpfform eingefüllten Frischbetons durch definiertes Schocken in einen Betonkuchen simuliert.

Der Luftgehalt gibt Hinweise auf die Verdichtbarkeit des Frischbetons und die daraus zu erwartenden Festbetoneigenschaften (Dichtigkeit, Dauerhaftigkeit). Der Gehalt an Luftporen wird mit dem Druckausgleichverfahren bestimmt.

Die Druckfestigkeit ist ein Maß für die Stabilität von Beton. Die erforderliche Druckfestigkeit von Beton für die Verwendung ist in Klassen eingeordnet und standardisiert.

Es hat sich gezeigt, dass der mit dem Testwasser hergestellte Beton in den durchgeführten Versuchen signifikante Unterschiede zu dem mit Referenzwasser hergestellten Beton aufweist.

Tabelle 3

| Parameter | Referenzwasser | Testwasser |
|---|---|---|
| Ø Ausbreitmaß d. Frischbetons [mm] | 369 | 431 |
| Ø Luftporen d. Frischbetons [%] | 0,40 | 0,50 |
| Ø Druckfestigkeit d. Festbetons N/mm$^2$] | 38,63 | 33,12 |

Beispiel 7: Vergleich mit nach anderen Verfahren behandeltem Wasser

Es wurden zudem Vergleiche mit nach anderen Verfahren behandeltem Wasser vorgenommen.

Es wurden jeweils 5 Wasserproben nach den in Beispiel 4 beschrieben Methoden behandelt. Die Herstellung und Untersuchung des Betons erfolgte analog zu Beispiel 5 und 6. Die Messungen erfolgten wie in Beispiel 7 erläutert.

Die Ergebnisse dieser Untersuchungen sind in Tabelle 4 dargestellt. Es hat sich gezeigt, dass sich Betonproben, die mit nach anderen Methoden behandelten Wasserproben hergestellt wurden, in ihren Eigenschaften kaum voneinander unterscheiden und im Wesentlichen die gleichen Werte erreicht werden, wie für die mit unbehandeltem Referenzwasser hergestellten Proben.

Die mit dem Testwasser erzeugten Proben wiesen demgegenüber deutlich verbesserte Eigenschaften auf.

Tabelle 4

| Parameter | Testwasser | El. Spule Kalk Max | Grander Wasserbelebung |
|---|---|---|---|
| Ø Ausbreitmaß d. Frischbetons [mm] | 431 | 367 | 369 |
| Ø Luftporen d. Frischbetons [%] | 0,50 | 0,40 | 0,41 |
| Ø Druckfestigkeit d. Festbetons [N/mm$^2$] | 33,12 | 38,34 | 37,75 |

Beispiel 8: Untersuchung der elektrochemischen Eigenschaften und der Oberflächenspannung des behandelten Wassers

An einer Wasserentnahmestelle wurde vor Installation der Maßnahme eine Referenzprobe entnommen und nach Installation der Wasseraufbereitungsanlage nach 10 Minuten Einlaufzeit eine Vergleichsprobe gezogen. Bei diesen Versuchen war die Wassersäule durch die Kunststoffleitungszuführung zum Haus nicht geerdet. Die Erdung erfolgte über die Hausinstallation.

Es wurde die Oberflächenspannung und das Redoxpotential der Proben gemessen. Die Messung erfolgte am Tag der Probennahme und drei Tage nach der Probennahme, um die Stabilität des Effekts zu untersuchen.

Zur Bestimmung Oberflächenspannung wurde ein Tensiometer der Firma Krüss verwendet. Die Bestimmung wurde gemäß der Norm EN 14370:2004 mittels der Ringmethode nach Du Noüy durchgeführt.

Die Oberflächenspannung weist eine Wirkungsrichtung parallel zur Flüssigkeitsoberfläche auf. Die Bestimmung der Oberflächenspannung nach Du Noüy erfolgte indem ein benetzter Ring aus der Flüssigkeit gezogen wurde und dabei die Kraft bis zum Abreißen des Wasserfilms gemessen wurde. Aus dieser gemessen Kraft kann man auf die Oberflächenspannung rückschließen.

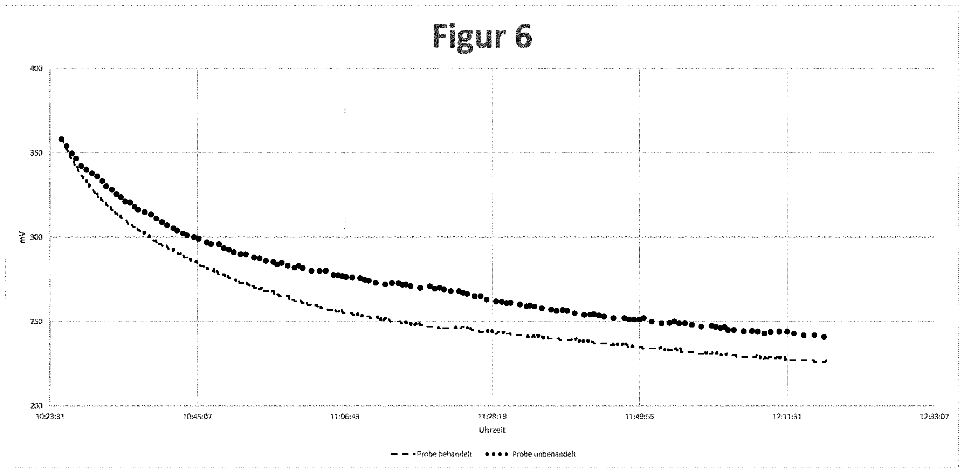

Das Redoxpotential wurde gemäß DIN 38404-6: 1984 05 ermittelt. Die Messung erfolgte über einen längeren Zeitraum, bis ein stabiler Wert erreicht wurde. Der Verlauf der beiden Messkurven, welche unter identen Bedingungen erstellt wurden, ist in **Fig. 6** ersichtlich. Das Redoxpotential bzw. die Redox-Spannung wurde unter Standardbedingungen gegen eine Standard-Referenz-Wasserstoffhalbzelle gemessen. In biologischen Systemen ist das Standardredoxpotential definiert beim pH 7,0 gegen eine Standard-Wasserstoffelektrode und bei einem Partialdruck von Wasserstoff von 1 bar. Eine Absenkung des Redoxpotentials entspricht somit einer Erhöhung des Reduktionsvermögen des Wassers.

Beispielsweise wird durch Wasser mit einem höheren Redoxpotential eine größere Endfestigkeit des Betons erhalten. Wasser mit einem geringeren Redoxpotential erzeugt einen "flüssigeren" Frischbeton mit geringerer Endhärte des Festbeton. In diesem Fall kann man bei gleichen w/z - Verhältnis Wasser und Zement einsparen, und eine gleiche Ausgangshärte erhalten. Das Ergebnis ist eine Zementeinsparung in der Betonherstellung bei gleicher Festigkeit und Konsistenz. Je nach Ausbildung des Minuspols in dem Prozess kann das Redoxpotential steigen oder sinken, wobei beide Richtungen unterschiedliche Vorteile bringen nämlich entweder eine größere Endfestigkeit bei Verwendung eines höheren Redoxpotentials, bzw. eine Zementeinsparung bei Verwendung eines niedrigeren Redoxpotentials. Darüber hinaus erweist sich die Erhöhung bzw. Absenkung des Redoxpotentials bestimmter Ausgangswässer als vorteilhaft für viele andere Prozesse, bei denen Wasser als Lösungsmittel oder Reaktionsmittel benötigt wird. Je nach technischer oder biologischer Anforderung muss die Ausbildung des Minuspoles beachtet werden.

Die Ergebnisse sind in Tabelle 5 zusammengefasst.

Tabelle 5

| Parameter | Referenzwasser | Testwasser |
|---|---|---|
| Ø Oberflächenspannung (bei 20°C) [mN/m] | 66,95 | 70,46 |
| Ø Redoxpotential [mV] | 244 | 227 |

Beispiel 9: Behandlung von Wasser mit und ohne Hohlraumresonator

Da sich die Resonanzfrequenz, auf die die Antennenlängen abgestimmt sind, generell auf flüssiges Wasser beziehen, zeigt auch eine Anwendung ohne ausgeführten Hohlraumresonator eine Wirkung.

Es wurde daher Referenzwasser verglichen, das durch ein normales V2A-Rohr strömte. Weiters wurde Testwasser ohne Hohlraumresonator behandelt, indem ein normales V2A Rohr verwendet wurde, das von Antennen aus Quarzglas, gefüllt mit Schwingkristallen nach Beispiel 1 ausgestattet wurde. Die Resonanzen bilden sich entsprechend den natürlichen Resonanzfrequenzen von fließendem Wasser in diesem Fall zufällig aus. Drittens wurde Testwasser mit der in **Fig. 1** dargestellten Wasseraufbereitungsanlage behandelt, welche die Resonanzgüte durch die konstruktive Ausführung signifikant erhöht. Die verwendete Wasseraufbereitungsanlage bestand aus Edelstahl V2A, wobei die Innenseite des Mantels poliert war. Als Material der Antennen wurde Quarzglas gewählt, gefüllt mit Schwingkristallen nach Beispiel 1.

Es wurden 4,5 l Wasser mit einer Temperatur von 11°C und einem Druck von 6 bar behandelt. Die Durchflusszeit betrug für die Wasseraufbereitungsanlage 5 Sekunden.

Das aufbereitete Wasser wurde in Glasbehältern für ca. 24 Stunden gelagert. Das unbehandelte Referenzwasser wurde gleichzeitig mit dem Testwasser entnommen und direkt in die Lagerungsbehälter überführt. Die Zuleitung vom Hochbehälter bestand aus einer PE-Kunststoffleitung.

Da die Reaktionen der Betoneigenschaften der zuverlässigste Zeiger für eine Wirksamkeit sind, wurden diese Auswirkung untersucht. Als Nachweis für die verbesserten Eigenschaften wurden daher Betonproben hergestellt, wobei ebenso vorgegangen wurde wie für Beispiel 5, 6 und7.

Das behandelte Testwasser zeigte deutlich verbesserte Eigenschaften. Mit der Verwendung eines Hohlraumresonators lässt sich der Effekt signifikant verstärken, wobei das mit einem Hohlraumresonator behandelte Wasser nochmals eine deutliche Verbesserung im Vergleich zum nur mit den Antennen behandelten Wasser zeigte. Die Ergebnisse sind In Tabelle 6 dargestellt.

Tabelle 6

| Parameter | Referenzwasser | Testwasser o. Resonator | Testwasser m. Resonator |
|---|---|---|---|
| Ø Ausbreitmaß d. Frischbetons [mm] | 389 | 433 | 496 |
| Ø Druckfestigkeit d. Festbetons N/mm$^2$] (C16/20) | 33,06 | 28,14 | 24,25 |

Beispiel 10: Untersuchung der Auswirkung auf die Wasserbehandlung, wenn die Erdung der Wasserleitung ausschließlich über die Wasserleitung bzw. die Wassersäule erfolgt.

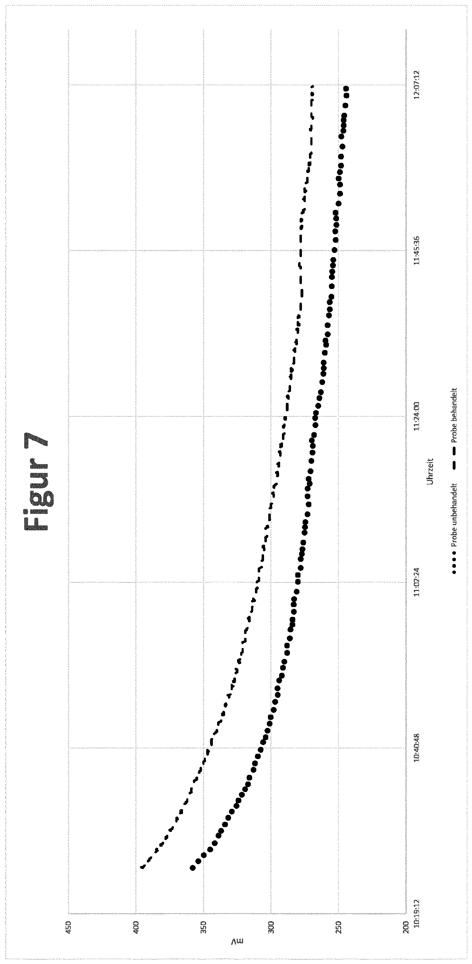

In dieser Versuchsanordnung wurde die Wasserbehandlung an einer Installation ausgeführt, bei der die Zuleitung in Form eines massiven Gussrohres ausgeführt ist.
An der Wasserbehandlungsmaßnahme selbst wurde keinerlei Erdung ausgeführt. Der Minuspol war somit klar definiert. An einer Wasserentnahmestelle wurde vor Installation der Maßnahme eine Referenzprobe entnommen und nach Installation der Wasseraufbereitungsanlage nach 10 Minuten Einlaufzeit eine Vergleichsprobe gezogen. An diesen Proben wurden die Oberflächenspannung und das Redoxpotential gemessen. Und zwar am ersten Tage nach der Probenahme. Die Ergebnisse sind in Tabelle 7 zusammengefasst.
Zur Bestimmung der Oberflächenspannung wurde ein Tensiometer der Firma Krüss verwendet. Die Bestimmung wurde gemäß der Norm EN 14370:2004 mittels der Ringmethode nach Du Noüy durchgeführt.
Das Redoxpotential wurde gemäß DIN 38404-6: 1984 05 ermittelt. Die Messung erfolgte über einen längeren Zeitraum, bis ein stabiler Wert erreicht wurde. Der Verlauf der beiden Messkurven, welche unter identen Bedingungen erstellt wurden, ist in **Fig. 7** ersichtlich.
Die Betonversuche wurden analog zu Beispiel 6 durchgeführt.

Tabelle 7

| Parameter | Referenzwasser | Testwasser |
|---|---|---|
| Ø Oberflächenspannung (bei 20°C) [mN/m] | 70,96 | 68,90 |
| Ø Redoxpotential [mV] | 247 | 270 |
| Ø Ausbreitmaß d. Frischbetons [mm] | 329 | 273 |
| Ø Druckfestigkeit d. Festbetons N/mm$^2$] (C16/20) | 34,20 | 38,73 |

Um bessere Ergebnisse zu erhalten, ist es daher vorteilhaft die Erdungsverhältnisse der Wasserzuführung zu kennen. Je nach Ausbildung des Minuspoles in dem Prozess kann das Redoxpotential steigen oder sinken, wie aus **Fig. 6** und **Fig. 7** bzw. Beispiel 9 und Beispiel 10 ersichtlich ist. Die Oberflächenspannungsänderung korreliert ebenfalls mit diesem Sachverhalt. Wenn die Erdungsverhältnisse bekannt sind und entsprechend ausgeführt sind, kann die Wasserbehandlung besonders einfach in die gewünschte Richtung geführt werden. Somit kann je nach Bedarf eine größere Endfestigkeit bei Verwendung eines höheren Redoxpotentials bzw. eine Zementeinsparung bei Verwendung eines niedrigeren Redoxpotentials erzielt werden.

**Patentansprüche**

1.   Vorrichtung zur Aufbereitung von Wasser umfassend

- einen Hohlraumresonator (5) mit einer Durchflussstrecke mit einem Einlass (101) für das aufzubereitende Wasser und einem Auslass (102), wobei sich die Durchflussstrecke in Durchflussrichtung (103) räumlich periodisch erweitert und verjüngt, wobei sich die Querschnittsfläche der Durchflussstrecke stetig ändert, und
- zumindest eine im Außenbereich der Durchflussstrecke angeordnete Antenne (8) zur Beaufschlagung des in der Durchflussstrecke befindlichen Wassers mit elektrischer und/oder magnetischer und/oder elektromagnetischer Energie.

2.   Vorrichtung nach Anspruch 1, **dadurch gekennzeichnet, dass** im Bereich des Einlasses (101) in Durchflussrichtung (103) vor der Durchflussstrecke eine Führungseinheit (11) vorgesehen ist, die eine Anzahl von schraubenförmig angeordneten Führungselementen (12) aufweist, die insbesondere dazu ausgebildet sind, das durch die Führungseinheit (11) strömende Wasser spiralförmig einzurollen, wobei vorzugsweise vorgesehen ist, dass sich der Strömungsquerschnitt der Führungseinheit (11) in Durchflussrichtung (103) verengt.

3.   Vorrichtung nach Anspruch 1 oder 2, **dadurch gekennzeichnet, dass** die Durchflussstrecke eine in Durchflussrichtung (103) räumlich periodische Verjüngung und Erweiterung aufweist und/oder dass die Durchflussstrecke eine knickfreie und stetige Verjüngung und Erweiterung aufweist.

4.   Vorrichtung nach einem der vorangehenden Ansprüche, **dadurch gekennzeichnet, dass** der Querschnitt der Durchflussstrecke kreisförmig oder elliptisch ausgebildet ist.

5. Vorrichtung nach Anspruch 3 oder 4, **dadurch gekennzeichnet, dass** der Durchmesser des Querschnitts der Durchflussstrecke über die Durchflussrichtung (103) sinusförmig variiert und/oder
dass der Verlauf des Durchmessers des Querschnitts über die Durchflussrichtung (103) durch Addition eines konstanten und zumindest eines sinusförmigen Anteils mit einer vorgegebenen räumlichen Periodenlänge festgelegt ist.

6. Vorrichtung nach einem der vorangehenden Ansprüche, **dadurch gekennzeichnet,**

- **dass** eine Vielzahl von Antennen (8) im Bereich des Außenumfangs der Durchflussstrecke, insbesondere im gleichen Abstand zur Durchflussstrecke, angeordnet sind, und/oder
- **dass** die einzelnen Antennen (8) des Antennensystems (6) auf einen gemeinsamen Brennpunkt ausgerichtet sind, der sich auf der Längsachse des Hohlraumresonators (5) und/oder im Innenbereich der Durchflussstrecke, vorzugsweise im Bereich des minimalen Durchmessers, befindet.

7. Vorrichtung nach einem der vorangehenden Ansprüche, **dadurch gekennzeichnet, dass** die Antenne (8) oder zumindest eine Antenne (8) eine Länge oder Resonanzwellenlänge aufweist, die der räumlichen Periodelänge der Verjüngungen und Erweiterungen der Durchflussstrecke des Hohlraumresonators (5) oder einem Vielfachen oder Teil dieser räumlichen Periodenlänge entspricht.

8. Vorrichtung nach einem der vorangehenden Ansprüche, **dadurch gekennzeichnet, dass** die räumliche Periodenlänge der Durchflussstrecke der Wellenlänge einer Eigenresonanzfrequenz von flüssigem Wasser, insbesondere im Bereich von 1-5 GHz oder 1-3 GHz, entspricht, vorzugsweise innerhalb eines Bereichs zwischen 2,45 GHz +/- 15 % liegt.

9. Vorrichtung nach einem der vorangehenden Ansprüche, **dadurch gekennzeichnet, dass** als Antennen (8) Dipolantennen vorgesehen sind, die parallel zur Durchflussrichtung (103) der Durchflussstrecke oder spiralförmig im Außenbereich um die Durchflussstrecke gewickelt oder gewendelt sind, und vorzugsweise von einem strömungsseitigen Ende zum jeweils anderen strömungsseitigen Ende der Durchflussstrecke verlaufen.

10. Vorrichtung nach einem der vorangehenden Ansprüche, **dadurch gekennzeichnet, dass** zumindest eine Antenne (8), insbesondere alle Antennen (8), an einen oder mehrere Piezo-Resonatoren angeschlossen ist, deren einzelne Resonanzfrequenz im Bereich von 1 kHz bis 300 MHz liegt und/oder,
dass zumindest eine Antenne (8), insbesondere alle Antennen (8), röhrenförmig aufgebaut ist und im Inneren dieser zumindest einen Antenne (8) eine Anzahl von Schwingkristallen (300) angeordnet ist, deren einzelne Resonanzfrequenz im Bereich zwischen 1 kHz bis 300 MHz liegt.

11. Vorrichtung nach einem der vorangehenden Ansprüche, **dadurch gekennzeichnet, dass** die Antenne (8) oder die Antennen (8) an einem elektrischen Wechselspannungs- oder Wechselstromgenerator angeschlossen ist, der dazu ausgebildet ist, an die Antenne (8) oder die Antennen (8) ein elektrisches Spannungs- oder Stromsignal mit einer vorgegebenen Frequenz anzulegen, sodass die Antenne (8) oder die Antennen (8) elektromagnetische Wellen abstrahlt, deren Wellenlänge der räumlichen Periodenlänge der Durchflussstrecke oder einem Vielfachen oder Teil dieser Periodenlänge entspricht, wobei die Frequenz insbesondere im Bereich zwischen 1 und 5 GHz oder 1 und 3 GHz liegt, vorzugsweise innerhalb eines Bereichs von 2,45 GHz +/- 15 % liegt.

12. Vorrichtung nach einem der vorangehenden Ansprüche, **dadurch gekennzeichnet, dass** im Außenbereich der Antennen (8) eine Abschirmung gegen äußere Störquellen vorgesehen ist, wobei die Abschirmung insbesondere in Form eines die Antenne (8) oder die Antennen (8) und den Hohlraumresonator (5) umgebenden Gehäuses (10) ausgebildet ist.

13. Vorrichtung nach Anspruch 12, **dadurch gekennzeichnet,**

- **dass** das Gehäuse (10) zumindest teilweise, insbesondere im Bereich seines Außenmantels, doppelwandig ausgebildet ist, wobei in den doppelwandigen Gehäusebereichen (9) jeweils ein abschirmendes Material, insbesondere Wasser, zwischen den Gehäusewänden (13,14) angeordnet und/oder eingeschlossen ist, und/oder
- **dass** die äußere dem Hohlraumresonator (5) abgewandte Oberfläche der äußeren Gehäusewand (13) und/oder die den Antennen (8) zugewandte Seite der inneren Gehäusewand (14) spiegelnd oder reflektierend, ausgebildet ist.

**14.** Verfahren zur Aufbereitung von Wasser, insbesondere für die Betonherstellung, wobei das Wasser durch eine Durchflussstrecke des Hohlraumresonators (5) befördert wird, deren Querschnitt sich mehrfach, insbesondere periodisch, erweitert und verjüngt, und wobei das Wasser während des Durchströmens durch die Durchflussstrecke durch elektromagnetische Wellen bestrahlt wird, deren Wellenlänge der räumlichen Periodenlänge der Durchflussstrecke oder einem Vielfachen oder Teil dieser Periodenlänge entspricht, wobei die Frequenz insbesondere im Bereich zwischen 1 und 5 GHz liegt, vorzugsweise innerhalb eines Bereichs von 2,45 GHz +/- 15 % liegt.

**15.** Verfahren nach Anspruch 14, **dadurch gekennzeichnet, dass** das Wasser, bevor es die Durchflussstrecke durchläuft, durch eine Führungseinheit (11) umfassend eine Anzahl von schraubenförmig angeordneten Führungselementen (12) geführt wird und dadurch spiralförmig eingerollt wird.

**16.** Verfahren zur Betonherstellung, umfassend

- Aufbereiten von Wasser nach Anspruch 14 oder 15, wobei das Wasser mit einer elektromagnetischen Frequenz im Bereich zwischen 1 und 5 GHz, insbesondere mit einer Frequenz im Bereich zwischen 2,45 GHz +/- 15 % beaufschlagt wird,
- Herstellen von Beton unter Verwendung von Zement, von Zuschlagstoffen und dem aufbereiteten Wasser.

Figur 1

EP 3 705 459 A1

Schnitt A-A

Figur 2

# Figur 3

EP 3 705 459 A1

Schnitt A-A

Figur 4

Figur 5

300

8

EP 3 705 459 A1

EP 3 705 459 A1

# Figur 6

EP 3 705 459 A1

# Figur 7

**Europäisches Patentamt**
**European Patent Office**
**Office européen des brevets**

# EUROPÄISCHER RECHERCHENBERICHT

Nummer der Anmeldung

EP 20 16 1465

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 2 206 064 A (HITACHI ELEVATOR ENG) 29. Dezember 1988 (1988-12-29) | 1-16 | INV. C02F1/48 |
| Y | * Zusammenfassung; Abbildungen 8-10,1 * | 1,6,9-13 | C04B22/00 |
| | * Seite 10, Zeile 17 - Zeile 26 * | | C04B28/02 |
| | * Seite 11, Zeile 25 - Seite 12, Zeile 10 * | | B01J19/12 |
| | * Seite 13, Zeile 3 - Zeile 11 * | | |
| | * Seite 15, Zeile 14 - Zeile 22 * | | |
| | * Seite 26, Zeile 6 - Seite 29, Zeile 14 * | | |
| | * Seite 24, Zeile 25 * | | |
| | ----- | | |
| X | EP 0 805 129 A2 (ZHIWEI HOU [CN]; STEPHEN HUI RESEARCH LAB LIMIT [HK]) 5. November 1997 (1997-11-05) | 1-16 | |
| Y | * Zusammenfassung; Ansprüche 1,3-5; Abbildungen 1,8,5,7,8,9 * | 1,6,9-13 | |
| | * Seite 2, Zeile 24 - Zeile 33 * | | |
| | ----- | | |
| Y | US 2010/102003 A1 (HOLLAND HERBERT W [US]) 29. April 2010 (2010-04-29) | 1,6,9-13 | |
| | * Zusammenfassung; Ansprüche 15,16; Abbildung 4 * | | RECHERCHIERTE SACHGEBIETE (IPC) |
| | * Absatz [0080] - Absatz [0084] * | | C02F |
| | * Absatz [0093] * | | C04B |
| | * Absatz [0104] * | | B01J |
| | ----- | | |

Der vorliegende Recherchenbericht wurde für alle Patentansprüche erstellt

| Recherchenort | Abschlußdatum der Recherche | Prüfer |
|---|---|---|
| Den Haag | 29. Juni 2020 | Mulder, Lonneke |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 16 1465

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-06-2020

| Im Recherchenbericht angeführtes Patentdokument | Datum der Veröffentlichung | Mitglied(er) der Patentfamilie | Datum der Veröffentlichung |
|---|---|---|---|
| GB 2206064 A | 29-12-1988 | GB 2206064 A<br>KR 880012486 A<br>US 4935133 A | 29-12-1988<br>28-11-1988<br>19-06-1990 |
| EP 0805129 A2 | 05-11-1997 | CN 2271437 Y<br>EP 0805129 A2 | 31-12-1997<br>05-11-1997 |
| US 2010102003 A1 | 29-04-2010 | US 2010102003 A1<br>US 2012267312 A1<br>US 2014311987 A1<br>US 2014360928 A1<br>US 2015246833 A1<br>US 2018057373 A1 | 29-04-2010<br>25-10-2012<br>23-10-2014<br>11-12-2014<br>03-09-2015<br>01-03-2018 |

EPO FORM P0461

Für nähere Einzelheiten zu diesem Anhang : siehe Amtsblatt des Europäischen Patentamts, Nr.12/82